# EUROPEAN PATENT APPLICATION

(11) **EP 1 208 888 A2**
(43) Date of publication of application: **29.05.2002**
(21) Application number: 01309265.5
(22) Date of filing: 31.10.2001
(51) Int. Cl.: A63F 13/12

(54) **Communication system, entertainment device, recording medium, and program**

(30) Priority: 31.10.2000 JP 2000332731; 26.10.2001 JP 2001329014
(71) Applicant: Sony Computer Entertainment Inc., Tokyo 107-0052 (JP)
(72) Inventor: Takatsuka, Susumu, Sony Computer Entertainment Inc, Tokyo 107-0052 (JP); Miyaki, Satoru, Sony Computer Entertainment Inc., Tokyo 107-0052 (JP); Matsumoto, Shingo, Sony Computer Entertainment Inc, Tokyo 107-0052 (JP)
(74) Representative: Hedley, Nicholas James Matthew

(57) **Abstract**

A system for allowing a user to enjoy amusement and interest over a network comprises a handbill preparation, which prepares handbill information based on a free format or fixed format, a handbill transmission means, which transmits handbill information to server, reception processing, which receives said handbill information from server and receives items from other users, answerback processing, which sends back items in response to sent handbill information and sends back, for example, a thank-you card in response to sent handbill information and degree-of-intimacy updating, which, if transmitted handbill information is information concerning a request and a reply has been received that agrees to said request, increments the degree of intimacy concerning the other users who emit said reply.

## Description

### FIELD OF THE INVENTION

This invention concerns a communication system by which information is exchanged via a network, an entertainment system to be used on the client side in said communications system, a recording medium on which are recorded programs and data to be used by said entertainment device, and the programs themselves for realizing said communication system.

### BACKGROUND OF THE INVENTION

As information devices (entertainment systems) such as entertainment devices that include video game machines, there are those that allow one to play games by manipulating operation devices while causing to be displayed on the screen of a television receiver the content of the game, which is stored on a recording medium such as a CD-ROM.

The entertainment device and operation device in this entertainment system are usually connected by a serial interface, and when a clock (pulse) is sent from the entertainment device, key switch information, etc. that corresponds to operations by the user is sent from the operation device synchronized to the clock (pulse).

Recently, by providing vibration generation means to provide vibration to the user upon request from outside the operation device (for example, from the entertainment device), systems have been developed and made practical in which, for example, the user is given various types of vibration in response to user operations during the course of playing a game.

The spread of networks (the Internet) has made it simple for users to extract via their computers information distributed from a server, and to conveniently send text to recipients using e-mail. Of course, a user can not only receive information but also provide information to a server.

Such widespread use of networks makes it simple and speedy to obtain information, allowing users to obtain, as text data or image data, various information from countries all over the world while remaining at home or at the office.

Obtaining information via a network is done by connecting the user-side computer to the network. If the information is text data only, a short-duration connection suffices, but if the information is image data or audio data, a long-duration connection is necessary in order to take in such information, and because of this, there is the problem that the user is tied down to his computer all this while, and the communication expenses grow large as well.

Examples have been proposed in which the connection between the user-side computer and the network is made of short duration, and in this short-duration connection, information is received from the server and information from the user is transmitted (for example, see JP patent publication No. H11-46193 [1999] and H9-269923 [1997]).

Also, examples have been proposed in which if information obtained from a server via the network is to be reported to the user, it is conveyed via characters displayed on a monitor (for example, see JP patent publication No. H11-242546 [1999]).

But heretofore it has been done in such a way that, for example on the transmission side, information concerning the user on said transmission side and data describing questions, etc. by the transmission-side user are transmitted to the server and are distributed to other users via the server.

In this case, the distributed data concerns exclusively the user and does not relate to characters displayed on the monitor. That is, heretofore, there is no conception that a user uses for sake of the characters the information sent from another user while playing with characters, and the user builds a good relationship with other users through characters.

Also, heretofore, to view information that has been sent, one clicks a special icon and opens a separate window, so there is no big difference with ordinary e-mail software, and there is concern for lacking in the propensity to maintain interest.

### SUMMARY OF THE INVENTION

The purpose of this invention, which was devised in consideration of such problems, is to provide a communication system, an entertainment device, a recording medium, and a program that allow the user to enjoy amusement and interest heretofore unavailable over a network by, for example, building good relationships with other users via characters by, for example, using the information sent from another user for a character while the user plays with characters, and that allow the user to handle various handbill information, thereby making it possible transmit information with a game-like sense.

The communication system of this invention is characterized in that it has a server connected to a network and an entertainment device that can be accessed through said server and said network and to which at least a display device is connected, and said entertainment device has at least a handbill processing means that transmits to said server, for distribution to other entertainment devices, handbill information by which is displayed content concerning characters to be displayed on said display device.

The entertainment device of this invention is characterized in that, in an entertainment device that can be accessed through a server and network and to which at least a display device can be connected, it has at least a handbill processing means that transmits to said server, for distribution to other entertainment devices, handbill information by which is displayed content concerning characters to be displayed on said display device.

The recording medium of this invention is characterized in that it is a recording medium on which are recorded programs and data to be used in an entertainment device that can be accessed through a server and network, and it has at least a handbill processing step that transmits to said server, for distribution to other entertainment devices, handbill information by which is displayed content concerning characters to be displayed on said display device.

The program of this invention is characterized in that, in a computer readable and executable program used in an entertainment device that can be accessed through a server and network, it has at least a handbill processing step that transmits to said server, for distribution to other entertainment devices, handbill information by which is displayed content concerning characters to be displayed on said display device.

In this way, handbill information from for example a given entertainment device is distributed to other entertainment devices via a network and servers. In this case, the handbill information concerns not the user but rather characters to be displayed on display devices connected to users' entertainment devices. Thus a user who receives handbill information will give some sort of reply (including return messages) for the character or give presents for other users' characters. Through such replies and presents, a good relationship is built up with other users.

That is, this invention allows the user to enjoy amusement and interest heretofore unavailable over a network by, for example, building good relationships with other users via characters by, for example, using the information sent from another user for a character while the user plays with characters.

Also, said handbill processing means (step) may be made so as to have a handbill preparation means (step) that prepares said handbill information based on input information including at least graphic data, and a handbill transmission means (step) that transmits said handbill information.

In this case, one may prepare, through the handbill preparation means (step), handbill information that describes handwritten pictures and lettering by a free format. By sending such handbill information to other users, said other users have the sense of receiving a handwritten letter, making it possible to build more-intimate relationships. And because it is handwritten, one can simply draw lettering and pictures and enjoy amusement and interest not found in fixed formats.

Also, said handbill processing means (step) may be made so as to have a handbill preparation means (step) that lays out input information according to one format selected from multiple formats and prepares said handbill information, and a handbill transmission means (step) that transmits to the server at least information concerning said selected format and information concerning the layout of said input information.

In this way, handbill information is prepared with input information laid out according to one format selected from multiple formats. And if this handbill information is to be sent, at least information concerning said selected format and information concerning the layout of said input information are sent. That is, on the side that receives the handbill information, the handbill information is reconstructed based on the sent information concerning said selected format and information concerning the layout of said input information. In this case, the transfer speed can be increased and the speedy exchange of information becomes possible, because text data alone suffices as transmission data, with no need to send graphic data, etc., whose quantity of data is voluminous.

Also, said handbill transmission means (step) may be made so as to have a transmission event processing means (step) that performs event display, including the display of a specified character concerning the handbill, when said handbill information is prepared by means of said handbill preparation means (step).

It is possible to establish an interesting transmission style, for example in which, when the handbill information is prepared by means of the handbill preparation means (step), the handbill information is transmitted by performing an event in which a specified character appears, the handbill information is handed over to this specified character, then said specified character disappears from the screen. The actual transmission of handbill information is done electrically, but by performing such an event, one can have the sense that the specified character is delivering the handbill, which has a physical image, to another user, the sense of familiarity with the specified character is enhanced, and interest can be maintained in the exchange of information by means of handbill information.

Also, said server may be made so as to have a handbill distribution means (step) that distributes received handbill information to any other entertainment devices. In this case, said handbill distribution means (step) may be made so as to distribute said handbill information to those entertainment devices, among said other entertainment devices, that concern users that meet the distribution conditions included in said received handbill information.

In this way, handbill information can be transmitted not to a large number of unspecified users but to those users who appear to have an interest in the handbill information to be transmitted, making it possible to greatly shorten the time for building a good relationship with other users. Thus even a user who transmits handbill information for the first time can exchange information with other users in a short time, and even users who are not good at exchanging information can do it in a simple, free-and-easy way.

Also, said handbill processing means (step) may be made so as to have a reception event processing means (step) that performs event display, including the display of a specified character concerning the handbill, when said handbill information is received from said server. In this way, for example, when handbill information is received, an event display takes place in which a specified character appears, and a character other than this specified character receives the handbill information from said specified character or picks up the handbill information that has fallen at that spot. In this case, one can establish an interesting reception style for handbill information.

Also, said reception event processing means (step) may be made so as to have a handbill display means (step) that displays said received handbill information according to a prescribed input operation. In this case, if said handbill information is prepared with input information laid out according to one format selected from multiple formats, said handbill display means (step) reconstructs and displays said handbill information based on at least information concerning said selected format and information concerning the layout of said input information.

Said prescribed input operation may be made so as to include instructions to said specified character that is displayed. Here, if for example it is set to a display mode in which the cursor moves according to the input operation, it may be made so that, by putting said cursor on the specified character, an event display takes place in which said specified character displays the handbill information as if opening up a paper handbill so that the user sees it.

Also, said prescribed input operation may be made so as to include instructions to displayed characters other than said prescribed character. As described above, if for example it is set to a display mode in which the cursor moves according to the input operation, it may be made so that, by putting said cursor on a character, other than the specified character, that receives or picks up the handbill information, an event display takes place in which said character displays the handbill information as if opening up a paper handbill so that the user sees it.

If good relationships are to be built up with other users, said handbill processing means (step) may be made so as to have a parameter updating means (step) in which, if the transmitted handbill information is information concerning a request and a reply agreeing to said request is received, a parameter indicating the goodness of the relationship is incremented concerning the other users who issue said reply.

In this case, said parameter indicating the goodness of the relationship may be made so as to be referenced at least in character movement display processing to be displayed on said display device. In this way, processing can be done in which, for example, conversations concerning other users in a good relationship can be incorporated such as by having utterances fly out from a certain character such as that it will give some present to the characters of other users one is in a good relationship with.

### BRIEF DESCRIPTION OF THE DRAWINGS

Figure 1 is a composition diagram showing an embodiment of a communication system of the present invention.
Figure 2 is a composition diagram showing an entertainment system of the present invention.
Figure 3 is a block diagram showing the circuit composition of an entertainment device of the present invention.
Figure 4 is a composition diagram showing a server.
Figure 5 is an explanatory diagram showing an example of the virtual space of the network service offered by a communication system of the present invention, showing in particular the exchange of items with handbill information.
Figure 6 is an explanatory diagram showing an example of characters displayed on a monitor.
Figure 7 is an explanatory diagram showing an example of handbill information.
Figure 8 is an explanatory diagram showing another example of the handbill information to be prepared.
Figure 9 is an explanatory diagram showing an example of the interior of a character's house.
Figure 10 is an explanatory diagram showing an example of operation input for having a handbill deliveryman distribute handbill information.
Figure 11 is an explanatory diagram showing a display example of a transmission event by a handbill deliveryman.
Figure 12 is an explanatory diagram showing an example of operation input for receiving handbill information delivered by a handbill deliveryman.
Figure 13 is a functional block diagram showing the composition of a handbill processing means that operates on an entertainment device relating to this embodiment, and a handbill distribution processing means that operates on a server.
Figure 14 is a flowchart showing the processing operation of the handbill processing means.
Figures 15-17 show the processing operation of the handbill preparation means.
Figure 18 is a flowchart showing the processing operation of the handbill transmission means.
Figure 19 is an explanatory diagram showing the itemization of the handbill transmission list.
Figure 20 is a flowchart showing the processing operation of the handbill distribution processing means.
Figure 21 is a flowchart showing the processing operation of the reception processing means.
Figure 22 is a flowchart showing the processing operation of the handbill reception processing means.
Figure 23 is a flowchart showing the processing operation of the response processing means.
Figure 24 is an explanatory diagram showing a bound file of namecards.
Figure 25 is an explanatory diagram showing the itemization of the handbill reception list.
Figure 26 is an explanatory diagram showing the itemization of the user information table.
Figure 27 is a flowchart showing the processing operation of the answerback processing means.
Figure 28 is a flowchart showing the processing operation of the item reception processing means.
Figure 29 is an explanatory diagram showing how a character rejoices upon opening a present.

### DETAILED DESCRIPTION OF THE PREFERRED EMBODIMENTS

The following detailed description is of the best mode or modes of the invention presently contemplated. Such description is not intended to be understood in a limiting sense, but to be an example of the invention presented solely for illustration thereof, and by reference to which in connection with the following description and the accompanying drawings one skilled in the art may be advised of the advantages and construction of the invention. In the various views of the drawings, like reference characters designate like or similar parts.

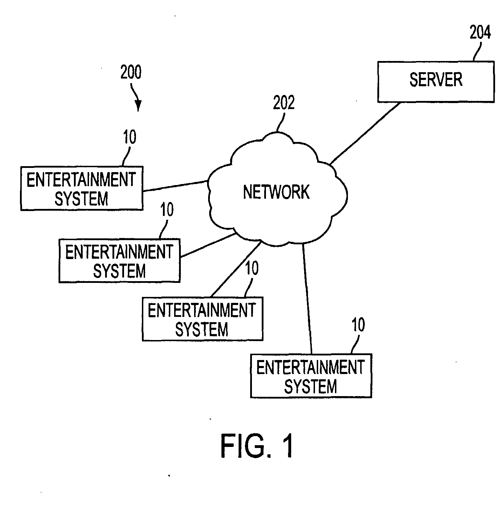

First, as shown in Figure 1, communication system 200 relating to this embodiment has server 204 connected to network 202, and multiple entertainment systems 10 that can be accessed via said server 204 and network 202.

In this embodiment, said network 202 is the Internet, and said server 204 is a prescribed website (a web server having a home page). The arrangement is such that a user connected to this Internet 202 can view Internet 202 information in hypertext format via the www (World Wide Web).

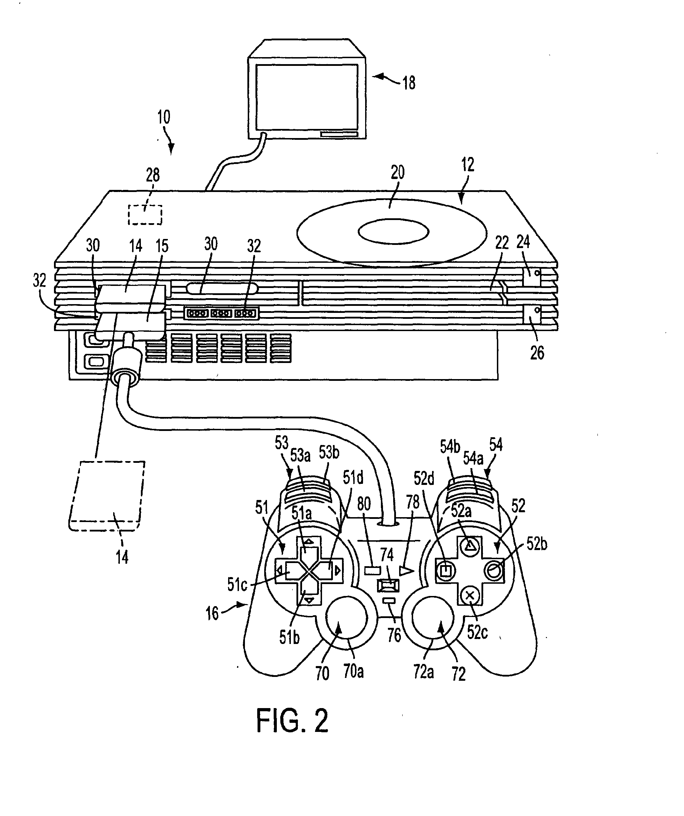

As shown in Figure 2, entertainment system 10 consists basically of entertainment device 12, which executes various computer programs, memory card 14, which can freely be attached to and detached from said entertainment device 12, operation device (controller) 16, which can be freely attached to and detached from entertainment device 12, and monitor 18, which is a television receiver or other display device (display) to which are supplied video and audio signals from entertainment device 12, etc.

Entertainment device 12 is for reading computer programs recorded on a high-capacity recording medium such as a CD-ROM or DVD-ROM or other optical disk 20 and executing games, etc. according to instructions from the user (for example, game players). Execution of a game means mainly receiving input from controller 16 via connector 15 and controlling the progress of the game while controlling the display and sound on monitor 18.

As shown in Figure 2, entertainment device 12 of this embodiment has the shape of flat rectangular parallelepipeds piled atop one another. Arranged on the front panel of entertainment device 12 are disk tray (disk mounting unit) 22 into which optical disk 20, which is a recording medium having a computer program and related data, is mounted and which moves frontward and rearward; reset switch 24 for arbitrarily resetting, etc. a computer program, etc. currently in the midst of execution; open button 26 for pulling out disk tray 22, two insertion openings 30 for memory cards 14, and two controller terminals 32 into which connector 15 of controller 16 is inserted. Arranged on the rear surface of entertainment device 12 are power switch 28 and an AV multi-output terminal (not pictured) which is an output terminal for video and audio and is attached to monitor 18 via an AV (audio-visual) cable.

Entertainment device 12 contains control functions to display characters and scenes on monitor 18 by reading and executing computer programs from optical disk 20, which is a CD-ROM, DVD-ROM, or other recording medium on which are recorded said computer programs and data for a computer game (video game). Also built in are various control functions such as playback of images (movies) by DVD (digital versatile disk (or digital video disk)), which is another optical disk 20, and playback of music by CDDA (compact disk digital audio). Device 12 also has the function of executing computer programs obtained by communication via a communication network, etc. Displayed on monitor 18 as a display device during execution of a computer program for a video game are three-dimensional computer graphics video generated by entertainment device 12.

In this case, signals from controller 16 are also processed by one of said control functions of entertainment device 12, and its content is reflected in, for example, the movement of characters or the switching of scenes on the screen of monitor 18.

On controller 16, first and second operation units 51 and 52 are provided left and right in the middle of the upper surface, third and fourth operation units 53 and 54 are provided on its side surface, and provided left and right on the near side of its upper surface are left-side rotation operation stick 70 and right-side rotation operation stick 72, which are both joysticks for performing analog operations.

First operation unit 51 is a pressing operation unit for, for example, imparting movements to characters, etc. displayed on the screen of monitor 18; its functions are set by a computer program, etc. recorded on optical disk 20. First operation unit 51 consists of four operation keys (direction keys) 51a, 51b, 51c, 51d that have the functions of moving a character, etc. up, down, left, right, etc. Direction key 51a is also called the upward key, direction key 51b is also called the downward key, direction key 51c is also called the leftward key, and direction key 51d is also called the rightward key.

Second operation unit 52 has four cylindrical operation buttons 52a, 52b, 52c, 52d for pressing operation; identification marks "Δ" (triangle), "O" (circle), "X" (cross), "□" (square) are attached to the tops of operation buttons 52a-52d, respectively, and operation buttons 52a-52d are also called, respectively, Δ (triangle) button 52a, O (circle) button 52b, X (cross) button 52c, and □ (square) button 52d. The functions of operation buttons 52a-52d of this second operation unit 52 are set by computer programs, etc. recorded on optical disk 20. For example, functions such as moving the left arm, right arm, left leg, and right leg of a character, etc. are assigned to operation buttons 52a-52d.

Third and fourth operation units 53 and 54, which have roughly the same structure, each have operation buttons for pressing operation aligned two each on top and bottom: operation button (L1 button) 53a and operation button (L2 button) 53b, as well as operation button (R1 button) 54a and operation button (R2 button) 54b. The functions of these third and fourth operation units 53 and 54 are likewise set by computer programs recorded on optical disk 20, such as the function of causing a character to perform special operations.

Left- and right-side rotation operation sticks 70 and 72 each have a signal input element such as a variable resistor that can rotate 360° about the operation axis, and an analog value is output in correspondence with the tilt. These left- and right-side rotation operation sticks 70 and 72 return to their central position by elastic members not pictured. By pressing left- and right-side rotation operation sticks 70 and 72 downward, a signal separate from the analog value associated with the tilt of left- and right-side rotation operation sticks 70 and 72 is output. In other words, left- and right-side rotation operation sticks 70 and 72 have the functions of operations buttons (L3 button) 70a and (R3 button) 72a as fifth and sixth operation units for pressing operation. By rotating and tilting left- and right-side rotation operation sticks 70 and 72, one can input command signals that make it possible to perform analog movements such as causing characters, etc. to rotate as they move, or vary their speed as they move, or change their state.

In Figure 2, left- and right-side rotation operation sticks 70 and 72 can be used by switching between aforesaid first and second operation units 51 and 52. This switching is done by analog mode switch 74. When left- and right-side rotation operation sticks 70 and 72 are selected by analog mode switch 74, display unit 76 flashes to display the selection state of left- and right-side rotation operation sticks 70 and 72.

Besides the foregoing, controller 16 also has start button (start switch) 78, which indicates the start of a game, etc., and selector button (selector switch) 80, which selects the game's degree of difficulty, etc. when a game begins.

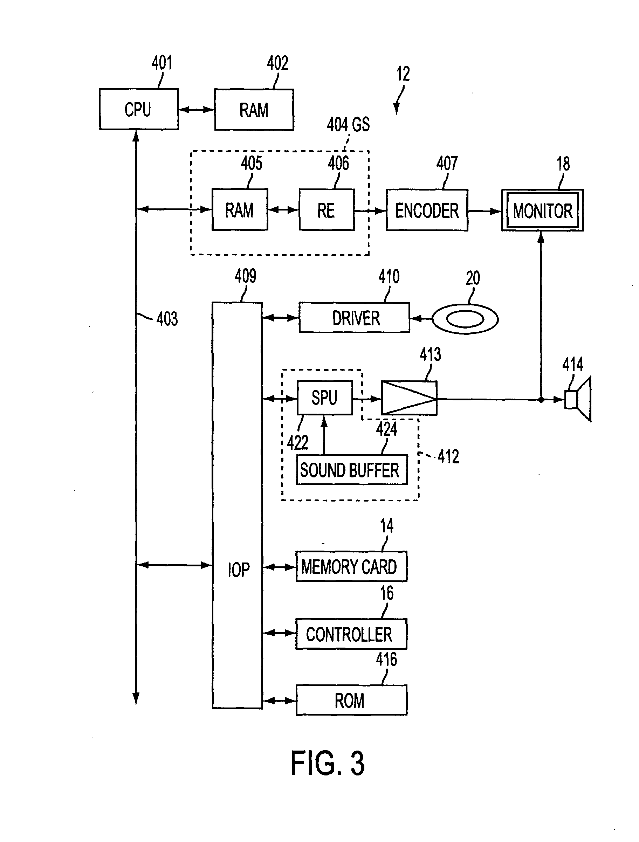

Next, referring to the block diagram in Figure 3, description about the internal composition and general operation of entertainment device 12 shown in Figure 2 is made.

This entertainment device 12 is constructed in such a way that RAM 402 as a semiconductor memory and bus 403 are each connected to CPU 401, which controls said entertainment device 12. Connected to said bus 403 are graphic synthesizer (GS) 404 and input-output processor (IOP) 409.

Included in GS 404 are RAM (image memory) 405, which includes a frame buffer, Z buffer, and texture memory, etc., and rendering engine 406, which has rendering functions that include the function of drawing to the frame buffer in this image memory 405. Monitor 18 as external equipment is connected to the thus-constituted GS 404 via encoder 407 for, for example, converting digital RGB signals, etc. to the NTSC-standard television system.

Connected to IOP 409 are driver 410 for playing and decoding data recorded on optical disk 20, sound generation system 412, memory card 14 as external memory that consists of flash memory, controller 16, and ROM 416, on which is recorded the operating system, etc.

Sound generation system 412 is connected via amplifier 413 to speaker 414 and monitor 18 as external equipment, and supplies audio signals to them. Sound generation system 412 has sound processing device (sound processing unit: SPU) 422, which generates music and sound effects, etc. based on instructions from CPU 401, and sound buffer 424, which stores the music and sound effects, etc. generated by this SPU 422. The signals of the music and sound effects, etc. generated by SPU 422 are supplied to the audio terminals of speaker 414 and monitor 18, and in this way music and sound effects, etc. are output (emitted) from said speaker 414 and monitor 18.

SPU 422 has an ADPCM (Adaptive Differential Pulse Code Modulation) decoding function, which generates audio data in which, for example, 16-bit audio data is adaptively encoded as 4-bit difference signals; a playback function that generates sound effects, etc. by playing back the waveform data stored in sound buffer 424, and a modulation function, which modulates and plays back the waveform data stored in sound buffer 424. By having such functions, this sound generation system 412 can be used as a so-called sampling sound source, which generates music and sound effects, etc. based on waveform data recorded in sound buffer 424 under instructions from CPU 401.

Memory card 14 is a card-type external memory device that consists of, for example, a CPU or gate array and flash memory, and through its insertion opening 30 it can be freely attached to and detached from entertainment device 12 shown in Figure 2. Stored on memory card 14 are the intermediate state of games, and programs, etc. for DVD playback.

Controller 16 is for giving entertainment device 12 commands (two-value commands or multi-value commands) by pressing multiple buttons provided on it. Also, driver 410 has a decoder for decoding images encoded based on the MPEG (Moving Picture Experts Group) standards.

Next, there is described how images are displayed on monitor 18 by operation of controller 16. As a premise, it is assumed that object data consisting of polygon vertex data, texture data, etc. recorded on optical disk 20 are read via driver 410 and are held in RAM 402 of CPU 401.

When instructions from the user are input to entertainment device 12 via controller 16, based on these instructions CPU 401 computes the position of objects in three dimensions (3D) and their orientation with respect to the viewpoint. Thus the polygon vertex data of an object defined by the X, Y, Z coordinate values of three orthogonal axes is changed. The post-change polygon vertex data are transformed by perspective transformation processing into two-dimensional coordinate data. The region prescribed by the two-dimensional coordinates is a so-called polygon.

The post-transformation two-dimensional coordinate data, Z data, and texture data are supplied to GS 404. GS 404 performs drawing processing by performing rendering based on the post-transformation two-dimensional coordinate data and Z data, and sequentially writing (drawing) the texture data to image memory 405 (in this case, to the frame buffer). After the image of one frame completed by this drawing processing is encoded by encoder 407, the drawn texture data is supplied to monitor 18 and is displayed as an image on its screen.

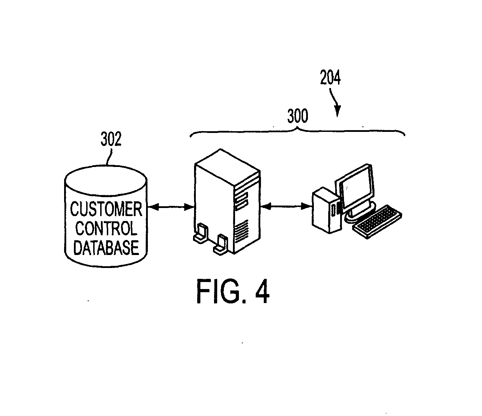

As shown in Figure 4, server 204 consists of server main body 300, which consists of, for example, a personal computer and, for example, customer control database 302, which is connected to said server main body 300.

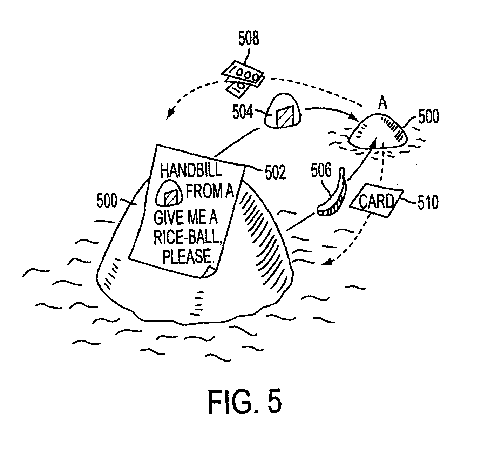

Next, there is described, with reference to Figures 5-29, the characteristic function of the communication system 200 of the present invention. Such function is to transmit at least handbill information to server 204 for distribution to other entertainment devices 12.

For example, as shown in Figure 5, users who are legitimately registered with a network service provided by communication system 200 of the present embodiment each live on a corresponding island 500 in the virtual space of this network service. To say that handbill information 502 is distributed, means that handbill information 502 is distributed from one island 500 (for example, user A) to various islands 500.

For example, handbill information 502 is distributed from island 500 of user A, and a separate user who reads said handbill information 502 may, for example, give a rice-ball 504, which is the requested item, or may give a banana 506, which is different from the requested item. User A then sends money 508 or thank-you card 510 (a card on which a thank-you message appears) in return for the reaction to handbill information 502. By carrying out such a series of actions, a good relationship is built up between these users, and their degree of intimacy increases. Of course, sometimes money 508 or thank-you card 510 is not sent.

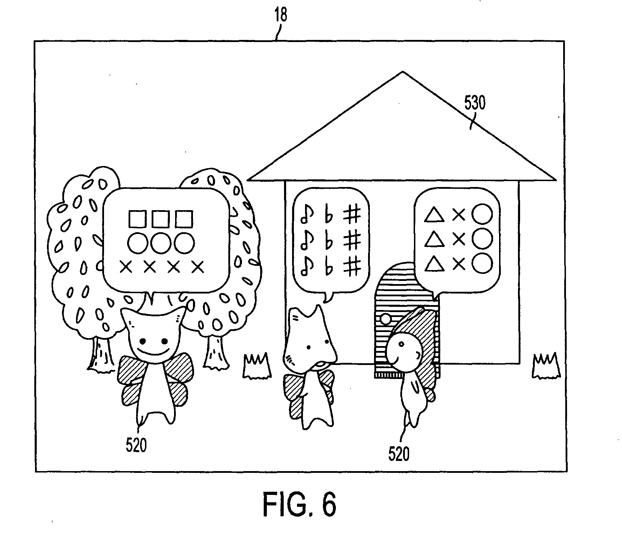

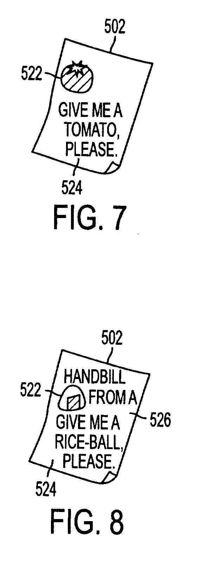

Here, with handbill information 502, for example as shown in Figure 6, content concerning character 520 displayed on monitor 18 is displayed, and for example as shown in Figure 7, what is displayed are a picture 522 showing a tool, food, or other item that can be handled by character 520, message 524 saying that these items will be given or making a request, and the name of the sender (including the name of the character). Figure 7 shows an example in which are displayed picture 522 of a tomato and message 524 requesting a tomato, and Figure 8 shows an example in which are displayed picture 522 of a rice-ball, message 524 requesting a rice-ball, and name 526 of the sender.

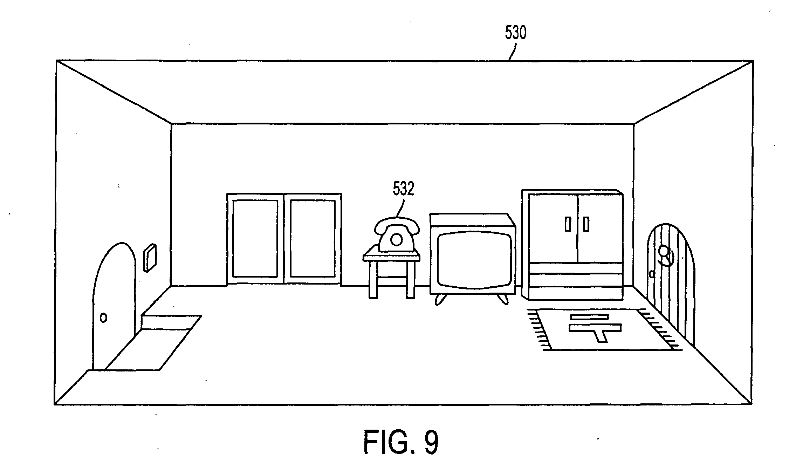

As shown for example in Figure 9, handbill information 502 is prepared by displaying a handbill preparation screen by, for example, double-clicking telephone 532 provided inside house 530 of character 520. On the handbill preparation screen, one can select a free format and multiple fixed formats for example, and if one selects a free format, one can fill in a picture and message by handwriting. If one selects an arbitrary fixed format from the multiple fixed formats, the handbill information is completed by filling in the message and the name of the sender, etc. by filling in blank spaces.

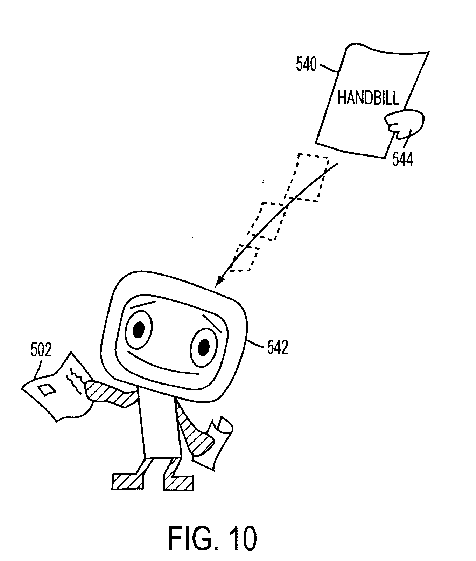

As shown for example in Figure 10, at the stage when handbill information 502 is completed, icon 540 symbolizing handbill information 502 is displayed on the right edge of the screen. At this time, one may determine to whom handbill information 502 shall be distributed (for example, the distribution region, age group, sex, etc.) and add this to handbill information 502 as distribution conditions.

Also, at the stage when handbill information 502 is completed, in a conversation with characters, a message is received saying that a virtual character has come who will deliver handbill information 502 (hereafter referred to for convenience as handbill deliveryman 542). The user, at the stage when he recognizes the arrival of handbill deliveryman 542 from the conversation of the characters, for example as shown in Figure 10, switches the scene to the place where handbill deliveryman 542 appears, displays cursor 544 on the screen, and drags-and-drops on handbill deliveryman 542 icon 540, which is displayed on the right edge of the screen and indicates handbill information 502.

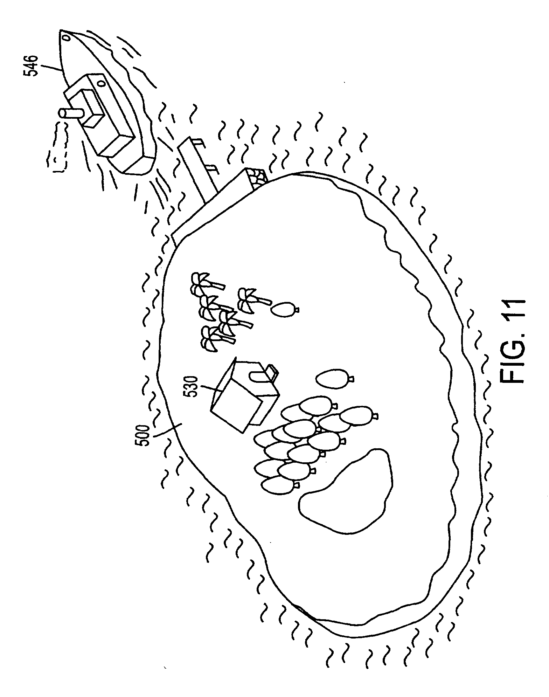

At this time, handbill deliveryman 542 assumes a display mode as if holding a paper handbill, sends the user a message saying that it will deliver handbill information 502, and disappears from the scene (erasure display). Or, the scene on the screen will change to a scene in which one travels by ship 546, as shown in Figure 11. The transmission of the handbill information 502 to the server 204 takes place after this event display, or approximately at the same time as this event display.

At server 204, if, as shown in Figure 4, handbill information 502 from a user registered in customer control database 302 is received and no distribution conditions are added to said handbill information 502, said handbill information 502 is distributed to any other registered user (other users registered in customer control database 302). If distribution conditions are added, then users who meet the distribution conditions are looked up among the other registered users, and said handbill information 502 is distributed to the looked-up users.

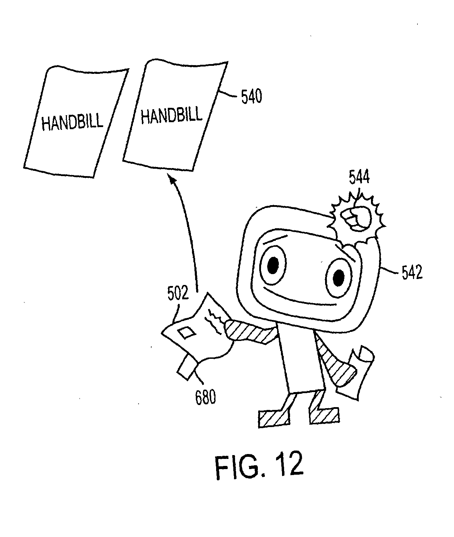

Another user to whom handbill information 502 is distributed receives, in conversation with characters, a message saying that handbill deliveryman 542 has arrived. At the stage at which said user recognizes from the conversation with characters that handbill deliveryman 542 has arrived, he switches to a scene of a place in which handbill deliveryman 542 appears, for example as shown in Figure 12. The user can confirm handbill information 502 by displaying cursor 544 on the screen, putting cursor 544 on handbill deliveryman 542, and, for example, double-clicking. That is, handbill deliveryman 542 displays the content of handbill information 502 as if opening a paper handbill so that said other user can see it. At the stage at which said user gives instructions to "close," handbill information 502 is displayed in, for example, the upper left comer of the screen as icon 540. To view handbill information 502, one can confirm it at any time by double-clicking icon 540 of handbill information 502.

Apart from aforesaid handbill deliveryman 542, handbill information 502 can be obtained (acquired) through characters with which said other user is enjoying a conversation. That is, one pattern is the case in which character 520, who encounters handbill deliveryman 542, receives handbill information 502 from handbill deliveryman 542 and shows it to said other user, and another pattern is the case in which characters pick up handbill information 502 that handbill deliveryman 542 has dropped and show it to said other user.

As handbill information 502, if for example a message requesting an item has been described, a good relationship is built up between the sender and said other user by said other user giving the sender the item as a present to the sender (more precisely, as a present to the sender's characters). That is, their degree of intimacy increases.

As handbill information 502, besides the aforesaid requests, there is also the case in which, for example, a message is displayed to the effect that one will give an item as a present. In this case, said other user sends to the sender as handbill information 502 a message that he wants the item for example. In response to this, the sender gives the items to said other user as a present, thereby building up a good relationship between the sender and said other user.

If a good relationship has been built up between a user and another user, for example, when a user enjoys conversing with characters, then for example statements will fly out that some present will be given from a character to characters of other users in a good relationship. That is, processing takes place that incorporates, for example, topics concerning other users with whom one has a good relationship.

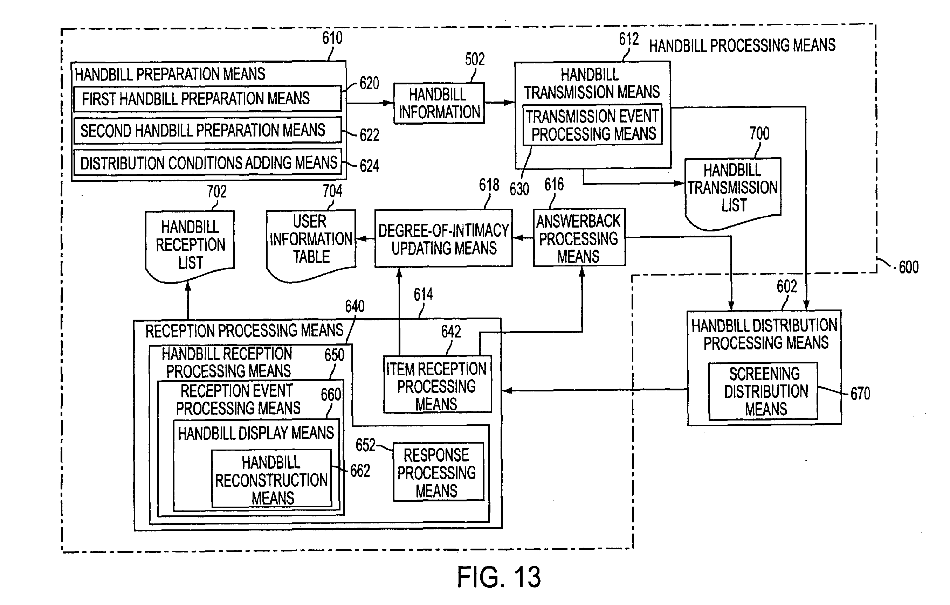

Next is described, with reference to Figures 13-29, an example of software for realizing the aforesaid function.

Such software has handbill processing means 600, which runs on entertainment device 12 and at least transmits to server 204, for distribution to other entertainment devices 12, handbill information 502 in which content concerning character 520 displayed on monitor 18 is displayed, and handbill distribution processing means 602, which runs on server 204 and distributes to arbitrary other entertainment devices 12 the handbill information 502 that it receives via network 202.

In particular, handbill processing means 600 is provided on entertainment device 12 by means of a random-access recording medium such as optical disk 20 or memory card 14, and by means of network 202. Here, the description is proceeded by assuming the case in which handbill processing means 600 runs after having been read into entertainment device 12 from optical disk 20. That is, handbill processing means 600 is operated on CPU 401 by, for example, being downloaded into RAM 402 of entertainment device 12 through the prescribed processing from a specified optical disk 20 previously played on entertainment device 12.

As shown in Figure 13, this handbill processing means 600 has handbill preparation means 610, which prepares handbill information 502 based on a free format or fixed format, handbill transmission means 612, which transmits handbill information 502 to server 204, reception processing means 614, which receives said handbill information 502 from server 204 and receives items from other users, answerback processing means 616, which sends back items in response to sent handbill information and sends back, for example, thank-you card 510 in response to sent handbill information, and degree-of-intimacy updating means 618 which, if transmitted handbill information 502 is information concerning a request and a reply has been received that agrees to said request, increments the degree of intimacy (goodness of the relationship) concerning the other user who emits said reply.

Said handbill preparation means 610 has first handbill preparation means 620, which prepares said handbill information 502 based on at least input information including graphic data, second handbill preparation means 622, which lays out the input information according to one format selected from multiple formats and prepares said handbill information 502, and distribution conditions adding means 624, which adds distribution conditions to handbill information 502.

Said handbill transmission means 612 has transmission event processing means 630, which, when said handbill information 502 is prepared by means of said handbill preparation means 610, performs event display including display of a specified character concerning handbill information 502.

Reception processing means 614 has handbill reception processing means 640, which receives said handbill information 502 from server 204 and processes the answerback, etc., and item reception processing means 642, which receives items given as presents from other users.

Handbill reception processing means 640 has reception event processing means 650, which, when said handbill information 502 is received from server 204, performs event display including display of a specified character concerning handbill information 502, and response processing means 652, which makes a response to handbill information 502. Said reception event processing means 650 has handbill display means 660, which displays said received handbill information 502 according to prescribed input operations.

Said handbill display means 660 has handbill reconstruction means 662 which, if said handbill information 502 is prepared with the information laid out according to one format selected from multiple formats, reconstructs and displays said handbill information 502 based on at least information concerning said selected format and information concerning the layout of said input information.

Also, said handbill distribution processing means 602 in server 204 has screening distribution means 670 which, if distribution conditions are included in received handbill information 502, distributes said handbill information 502 to those entertainment devices 12 among said other entertainment devices 12 that concern users who meet said distribution conditions.

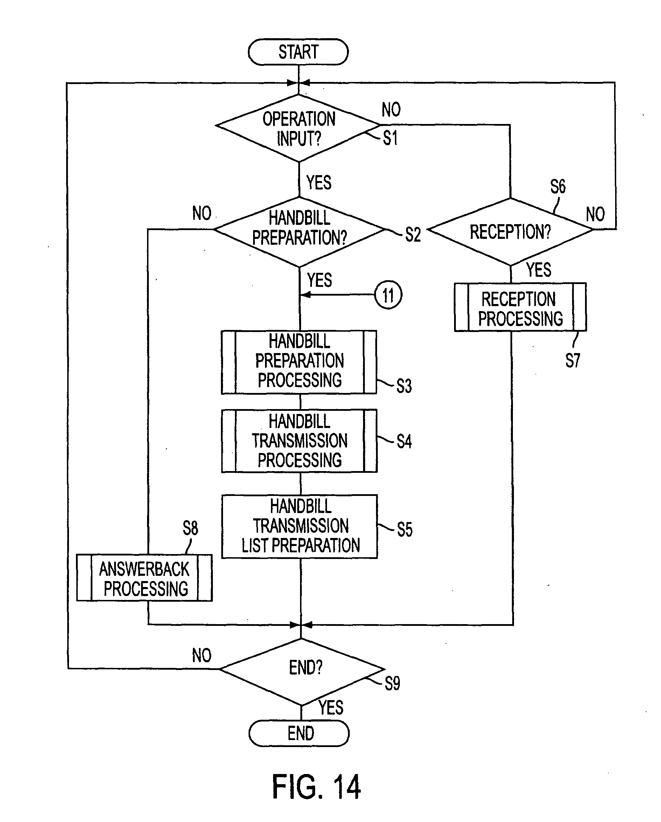

Next is described, with reference to Figures 14-29, the various processing operations of handbill processing means 600 in entertainment device 12 and handbill distribution processing means 602 in server 204.

First, in handbill processing means 600, in step S1 in Figure 14, it is decided whether there is operation input from the user. If there is operation input, one proceeds to the next step S2 and decides whether said operation input concerns handbill preparation. If so, one proceeds to the next step S3 and enters processing by handbill preparation means 610.

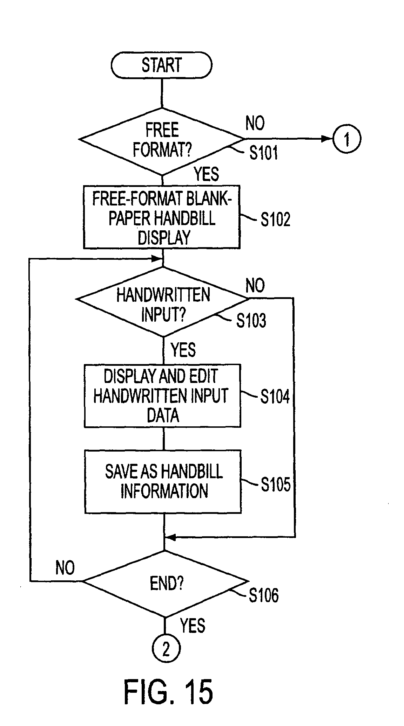

In this processing by handbill preparation means 610 first, in step S101 in Figure 15, it is decided whether free format has been selected. If free format has been selected, one enters processing by first handbill preparation means 620, and first, in step S102, one displays a free-format blank-paper handbill. Next, in step S103, one decides whether there is handwritten input. If there is handwritten input, one proceeds to the next step S104 and displays and edits the image data from handwritten input.

Then, in step S105, one saves the image data by handwritten input as handbill information 502. At the stage at which the processing by said step S105 has ended, or if it has been decided in aforesaid step S103 that there is no handwritten input, then in the next step S106 it is decided whether processing by first handbill preparation means 620 has ended. This decision is made according to whether, for example, the decision button (circle button 52b) has been operated. If processing by first handbill preparation means 620 has not ended, one returns to aforesaid step S103 and repeats the processing beginning with the step S103.

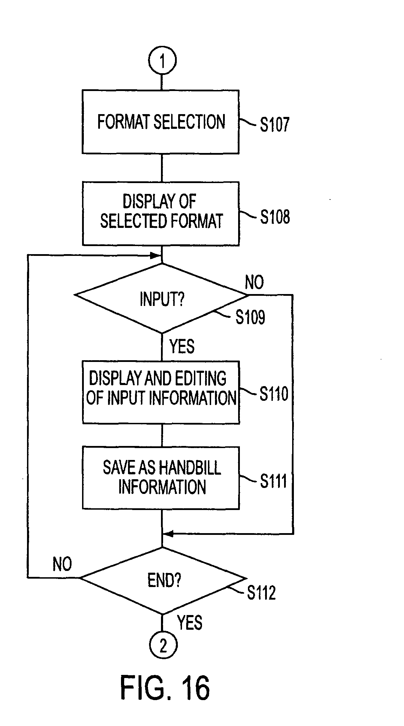

On the other hand, if in aforesaid step S101 it is decided that it is not free format, one proceeds to step S107 in Figure 16, enters processing by second handbill preparation means 622, and selects one fixed format from multiple previously prepared fixed formats. When a fixed format is selected, in next step S108 said selected fixed format is displayed enlarged. Then, in step S109, it is decided whether there is any operation input. If there is operation input, one proceeds to next step S110 and displays and edits input information according to the fixed format.

Then, in step S111, one saves as handbill information at least information concerning said selected fixed format and information concerning the layout of the input information. At the stage at which the processing in said step S111 ends, or if it has been decided in aforesaid step S109 that there is no input, then in the next step S112 it is decided whether processing by second handbill preparation means 622 has ended. This decision too is made according to whether, for example, the decision button (circle button 52b) has been operated. If processing by second handbill preparation means 622 has not ended, one returns to aforesaid step S109 and repeats the processing beginning with the step S109.

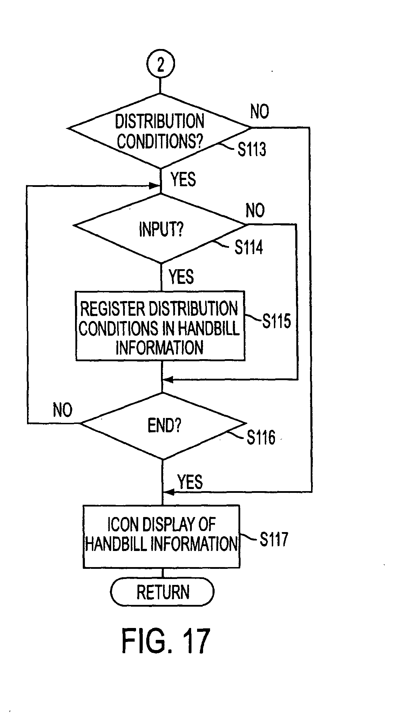

And if, in aforesaid step 106 in Figure 15, it has been decided that processing by first handbill preparation means 620 has ended, or if it has been decided in aforesaid step S112 in Figure 16 that processing by second handbill preparation means 622 has ended, then in step S113 in Figure 17 it is decided whether to add distribution conditions.

If there is an input operation to add distribution conditions, one enters processing by distribution conditions adding means 624 and first, in step S114, it is decided whether there is an input operation concerning distribution conditions. If there is input, one proceeds to the next step S115 and registers the distribution conditions for this time in handbill information 502. At the stage at which the processing by said step S115 has ended, or if it has been decided in aforesaid step S114 that there is no input operation, one proceeds to the next step S116, and it is decided whether processing by distribution conditions adding means 624 has ended. This decision too is made according to whether, for example, the decision button (circle button 52b) has been operated. If processing by distribution conditions adding means 624 has not ended, one returns to aforesaid step S114 and repeats the processing beginning with the step S114.

And if in said step S116 it is decided that processing by distribution conditions adding means 624 has ended, one proceeds to the next step S117 and displays handbill information 502 as icon 540, for example in the upper right comer of the screen as shown in Figure 10. This processing by handbill preparation means 610 ends at the stage at which the processing of said step S117 has ended.

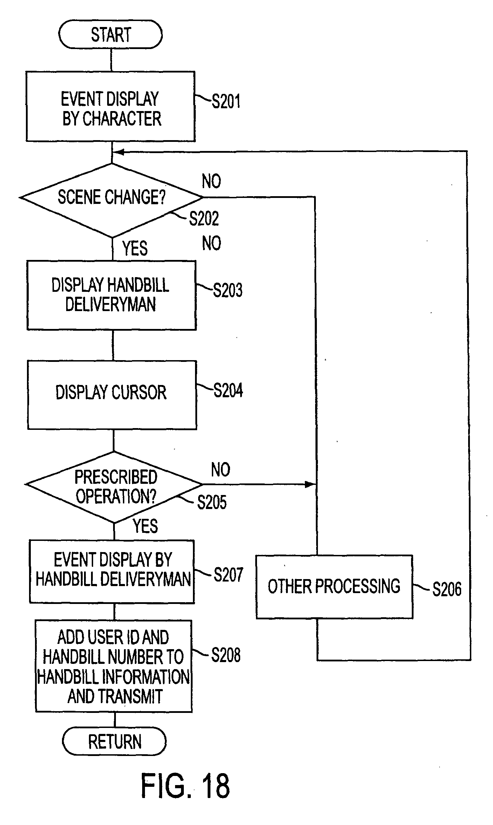

Returning to the main routine in Figure 14, in the next step S4 one enters processing by handbill transmission means 612. In this processing by handbill transmission means 612, first, in step S201 in Figure 18, an event by character 520 is displayed by means of transmission event processing means 630. At this event display, when a user is enjoying a conversation with another character (not pictured) inside house 530 in Figure 9 for example, words may be exchanged of a content that shows that handbill deliveryman 542 has come. By this content the user recognizes that handbill deliveryman 542 has come.

Next, in step S202, it is decided whether to switch the scene. This decision is made according to whether an operation input indicating a change of scenes has been carried out by the user. If the scene has been changed, one proceeds to the next step S203 and displays handbill deliveryman 542 as shown in, for example, Figure 10, then, in step S204, one displays cursor 544. Next, in step S205, it is decided whether the prescribed operation has been performed, namely, the operation of handing over handbill information 502 to handbill deliveryman 542. This prescribed operation may be, for example, the operation of using cursor 544 displayed on the screen to drag and drop onto handbill deliveryman 542 the icon 540 indicating handbill information 502 that is displayed on the right edge of the screen.

If the prescribed operation is not done in aforesaid step S205 or the scene is not switched in aforesaid step S202, one proceeds to step S206, and other processing is done corresponding to the operation input by the user. And if the prescribed operation is done in aforesaid step S205, one proceeds to the next step S207, and event display by handbill deliveryman 542 is performed by means of transmission event processing means 630. This event display may be one in which, for example, handbill deliveryman 542 assumes a display mode as if holding a paper handbill, sends the users a message saying that it will deliver handbill information 502, and disappears from the scene (erasure display), or the scene may change to one in which one travels by ship 546, as shown in Figure 11.

Next, in step S208, a user ID code and handbill number are added to handbill information 502, it is transmitted to server 204, and this processing by handbill transmission means 612 ends.

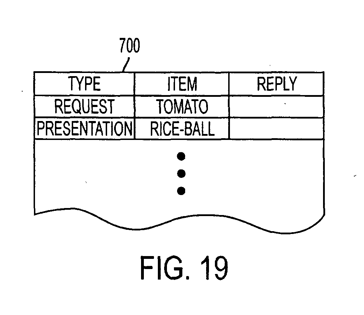

Returning to the main routine in Figure 14, in the next step S5, one prepares handbill transmission list 700 (see Figure 13). Registered on this handbill transmission list 700 are the type, item, and reply state for each code, as shown in Figure 19. Registered as the type is a symbol for distinguishing between whether transmitted handbill information 502 is for requesting an item or for giving an item as a present, for example, "1: request, 0: present". Registered as the reply state is, for example, a reply as to whether in response to handbill information 502 indicating an item request, the requested item has arrived from another user, for example, "1: reply, 0: no reply".

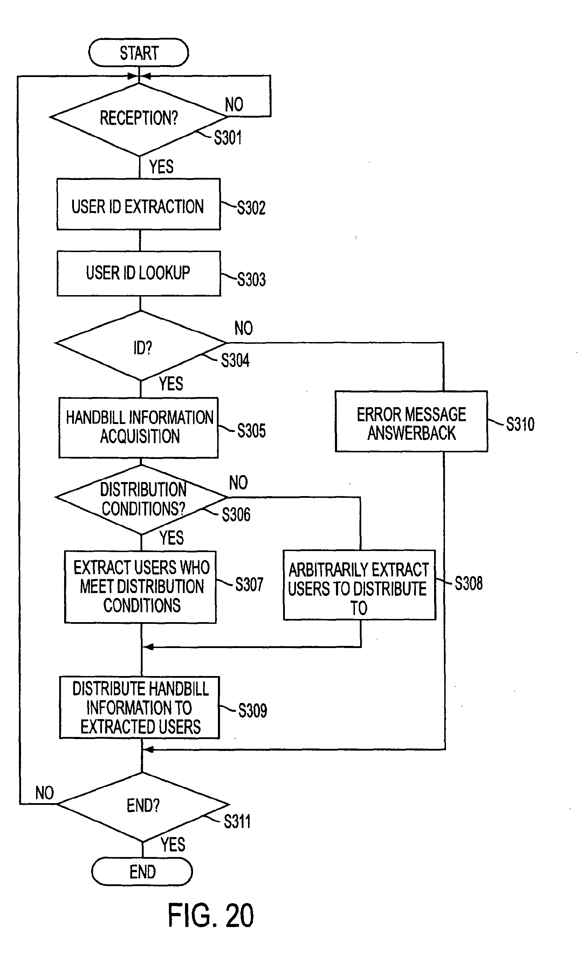

Next is described the processing operation by handbill distribution processing means 602 in server 204. As shown in Figure 20, it is decided by this handbill distribution processing means 602, first, in step S301, whether there is any transmission to said server 204, that is, whether reception has been detected. If reception has been detected, one proceeds to the next step S302 and extracts the user ID from the received data.

Next, in step S303, one looks up whether said extracted user ID is a user ID that is registered in customer control database 302, and in the next step S304, one decides the lookup results. That is, it is looked up whether the sender is a user who is legitimately registered for this network service. In said step S304, at the stage at which it is decided that it is a legitimate user, one proceeds to the next step S305 and performs reception processing. Specifically, first, one reads handbill information 502 from the received data.

Next, in step S306, it is decided whether distribution conditions have been added to said read handbill information 502. If distribution conditions have been added, one proceeds to the next step S307 and by means of screening distribution means 670 extracts from among the legitimate users registered in customer control database 302 the users who meet the current distribution conditions. If in said step S306 it is decided that no distribution conditions have been added, one proceeds to step S308 and arbitrarily extracts, from among the legitimate users registered in customer control database 302, users to whom the current handbill information 502 is to be distributed.

At the stage at which the processing in said step S307 or the processing in step S308 ends, one proceeds to the next step S309 and transmits the current handbill information 502 to said extracted users. On the other hand, if in said step S304 it is decided that it is not a legitimate user, one proceeds to step S310 and performs answerback processing of a message such as, for example, "Please register as a legitimate member. "

At the stage at which the processing in said step S309 or the processing in step S310 ends, one proceeds to the next step S311, and it is decided whether there is a program termination request to this handbill distribution processing means 602. If there is no program termination request, one returns to aforesaid step S301 and repeats the processing beginning with the step S301. Processing by this handbill distribution processing means 602 ends at the stage in which there is a program termination request.

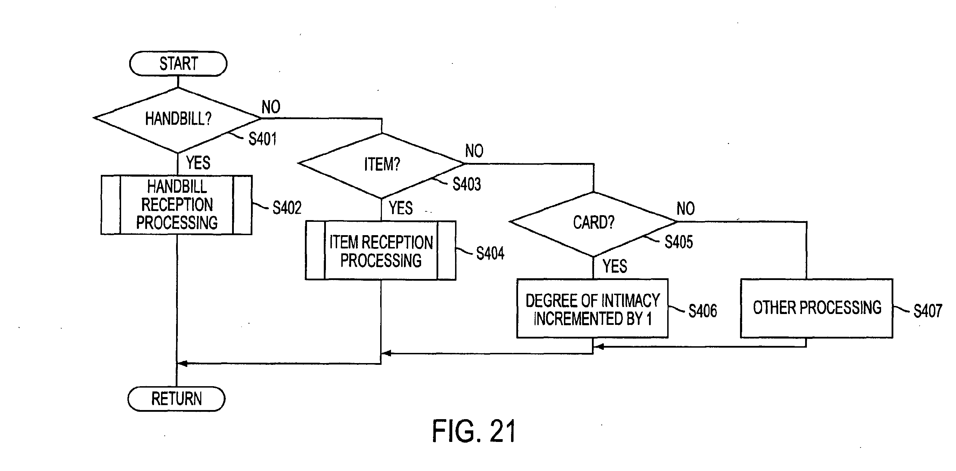

In an entertainment device 12 to which handbill information 502 has been transmitted from server 204, one proceeds via step S1 and step S6 in the main routine in Figure 14 to step S7 and enters processing by reception processing means 614. In reception processing by this reception processing means 614, first, in step S401 in Figure 21, it is decided whether it is reception of handbill information 502. If it is reception of handbill information 502, one proceeds to the next step S402 and enters processing by handbill reception processing means 640.

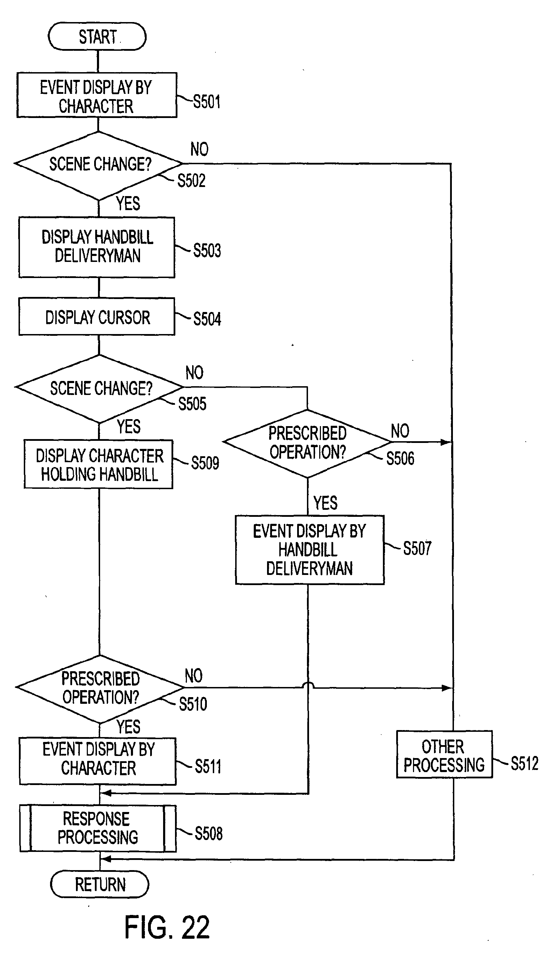

In processing by handbill reception processing means 640, first, in step S501 in Figure 22, an event by character 520 is displayed by means of reception event processing means 650. This display may be one in which, in conversation with character 520, words are exchanged of a content that shows that handbill deliveryman 542 has come. By this content, the user recognizes that handbill deliveryman 542 has come.

Next, in step S502, it is decided whether to change the scene. This decision is made according to whether operation input has been carried out that indicates a change of scene by the user. If a change of scene is made, one proceeds to the next step S503, displays handbill deliveryman 542, then, in step S504, displays cursor 544. Then, in step S505, a decision is made as to whether to do a scene change. If the scene is not changed, one proceeds to step S506, and it is decided whether the prescribed operation, that is, the operation instructing the disclosure of handbill information 502, has been carried out. This prescribed operation is an operation in which, for example, cursor 544 is put onto handbill deliveryman 542 and one, for example, double-clicks.

If the prescribed operation is carried out, one proceeds to the next step S507, and event display by handbill deliveryman 542 is done by means of reception event processing means 650. This event display may be a display mode in which, for example, handbill deliveryman 542 opens what looks like a paper handbill and shows it so that the user sees it.

In this display of handbill information 502, if handbill information 502 has been prepared by first handbill preparation means 620, then the display is done by means of handbill display means 660 based on graphic data contained in handbill information 502, and if handbill information 502 has been prepared by second handbill preparation means 622, then the display is done by means of handbill reconstruction means 662 based on information concerning the selected format and information concerning the layout of the input information that are contained in handbill information 502. Then, in step S508, one enters processing by response processing means 652.

On the other hand, if in aforesaid step S505 a scene change is made, one proceeds to step S509 and displays a state in which character 520 other than handbill deliveryman 542 is holding what appears to be a paper handbill. This scene shows a situation in which said character 520 is handed handbill information 502 from handbill deliveryman 542, or a situation in which he picks up handbill information 502, which has fallen onto the ground. In this case, it may be made so that, for example, the situation is clear from the conversation of said character 520.

Next, in step S510, it is decided whether the prescribed operation has been carried out, namely, the operation of giving instructions for the disclosure of handbill information 502. This prescribed operation is an operation in which, for example, cursor 544 is put onto character 520 holding handbill information 502 and one, for example, double-clicks.

If the prescribed operation is carried out, one proceeds to the next step S511, and event display by character 520 holding the handbill is done by means of reception event processing means 650. This event display may be a display mode in which, for example, character 520 holding the handbill opens what looks like a paper handbill and shows it so that the user sees it. In this display of handbill information 502 by character 520 too, it is done by handbill display means 660 and handbill reconstruction means 622, as described above. Then, in step S508, one enters processing by response processing means 652. And if in aforesaid step S506 or step S510 the prescribed operation is not done, or if in aforesaid step S502 there is no scene change, one proceeds to step S512, and other processing is done according to the operation input by the user.

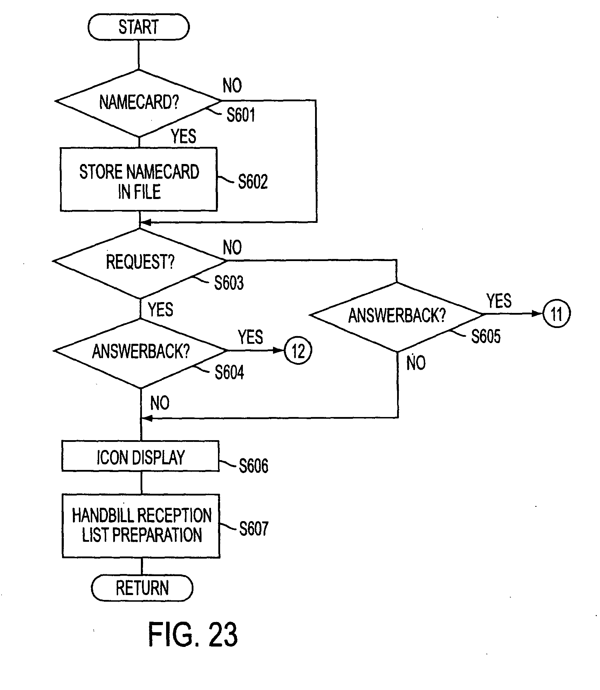

And in the processing by response processing means 652 in step S508, first, in step S601 in Figure 23, it is decided if a namecard (see Figure 12) containing sender information is attached to handbill information 502. Here, a namecard 680 means a text file giving the user's profile (individual information about the user, such as age, sex, hobbies, etc.) and e-mail address, etc. On the screen, such namecard is displayed by an icon having the shape of namecard 680.

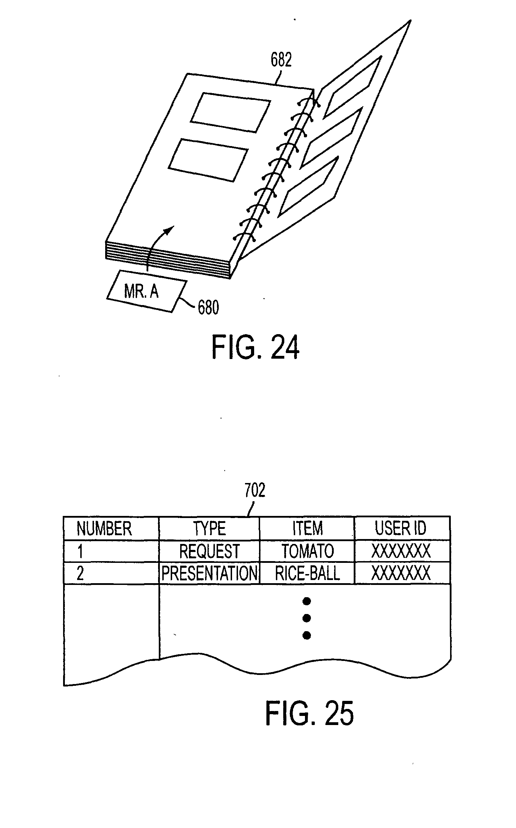

If namecard 680 is attached to handbill information 502, one proceeds to step S602, and, for example as shown in Figure 24, namecard 680 is bound into file 682 inside house 530 either automatically or according to operation input by the user. The user can confirm the content of this file 682 by, for example, double-clicking file 682. Among the bound namecards 680, it is possible, for example, to copy the user ID and use it for item transmission.

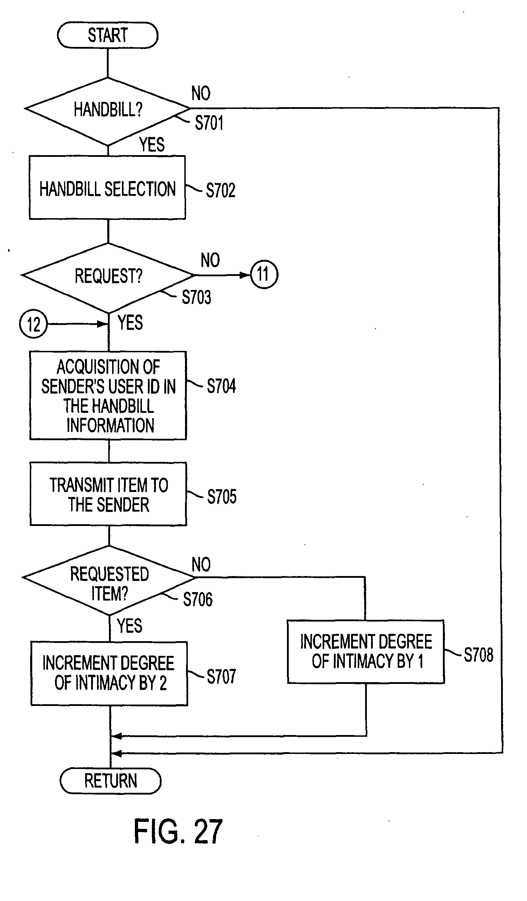

At the stage where processing in aforesaid step 602 ends, or if it is decided in aforesaid step 601 that no namecard 680 has been attached, one proceeds to the next step S603, and it is decided whether the handbill information 502 received this time concerns an item request. If it is an item request, one proceeds to the next step S604, and this time it is decided whether to answer back immediately. If there is operation input to answer back immediately, one proceeds to step S704 in answerback processing means 642 in Figure 27, which is described below, and transmits an item. The specific processing is described below.

In aforesaid step S603, if it is decided that it is not an item request, that is, if it is decided that it is the presentation of an item as a gift, one proceeds to step S605, and it is decided whether to answer back immediately. If there is operation input to answer back immediately, one proceeds to step S3 in the main routine in Figure 14 and performs processing in which, first, one prepares handbill information 502 to request an item, in the following step S4 one transmits handbill information 502 to the user who transmitted the item presentation, and in the next step S5 one registers this time's transmission information in handbill transmission list 700.

And if in aforesaid step S604 or step S605 in Figure 23 it is decided not to answer back immediately, one proceeds to step S606 and, for example as shown in Figure 12, displays the handbill information 502 received this time as icon 540 on the screen. Then, in step S607, one prepares handbill reception list 702 (see Figure 13). As shown in Figure 25, in this handbill reception list 702, for each code are registered an icon number, type (identifying whether it is an item request or an item present), item, and user ID. The icon number specifies the iconized handbill information 502, and by giving instructions for an arbitrary icon 540 among icons 540 of handbill information 502 by means of cursor 544, the icon number is specified from its coordinate data.

This processing by response processing means 652 ends at the stage at which processing in aforesaid step S607 ends. And as shown in Figure 22, this processing by handbill reception processing means 640 ends at the stage at which this processing by response processing means 652 ends.

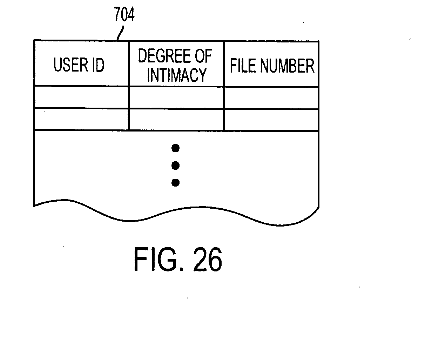

Next is described the case in which an answerback is made to handbill information 502, in particular, the case in which an item is transmitted in response to item request handbill information. This case is carried out by entering the processing by answerback processing means 616 in step S8 via step S1 and S2 in the main routine in Figure 14. User information table 704 shown in Figure 26 (see Figure 13) is used by this answerback processing means 616.

As shown in Figure 26, stored in this user information table 704 is user information that has previously been accessed, registering for each code at least the user ID and the degree of intimacy. Also, this user information table 704 is linked via file numbers with file 682, in which namecards 680 are bound.

And in this processing by answerback processing means 616, as shown in Figure 27, first, in step S701, it is decided whether there is received handbill information 502. This decision is made according to whether data is registered in handbill reception list 702. If there is received handbill information 502, one proceeds to the next step S702, and selection of handbill information 502 is made. This selection is made by placing cursor 544 on an arbitrary icon 540 among the handbill information 502 icons 540 displayed on the screen and, for example, double-clicking. This selection specifies the handbill information 502 registered in handbill reception list 702.

After the selection of handbill information 502 is made, in the next step S703 it is decided whether the handbill information 502 selected this time concerns an item request. If it concerns an item request, one proceeds to the next step S704 and acquires from handbill reception list 702 the user ID of the sender of the specified handbill information 502.

Next, in step S705, one transmits an arbitrary item to the user who corresponds to the user ID. Next, in step S706, it is decided whether the transmitted item is an item that meets the item request (the requested item). If it is the requested item, then the degree of intimacy of the user to whom the item request is transmitted is incremented by 2 in user information table 704 by means of degree-of-intimacy updating means 618.

When the degree of intimacy of a user in user information table 704 becomes high, for example +10 or more, then the frequency of topics concerning users of a high degree of intimacy increases in conversations between fellow characters 520 and between characters 520 and the user. For example, when a user is enjoying a conversation with characters, processing takes place in which, for example, topics concerning other users of a high degree of intimacy are incorporated, for example utterances fly out from a given character 520 such as saying it will give some present to the characters of other users of a high degree of intimacy.

If the transmitted item is not the requested item, then in step S708 the degree of intimacy of the user who transmitted the item request in user information table 704 is incremented by 1.

This processing by answerback processing means 616 ends at the stage at which processing in aforesaid step S707 or step S708 ends, or if in aforesaid step S701 it is decided that there is no received handbill information 502.

On the other hand, if in aforesaid step S703 it is decided that handbill information 502 is not an item request but an item presentation, one proceeds to step S3 in the main routine in Figure 14 and performs processing in which, first, one prepares handbill information 502 to request an item, in the following step S4 one transmits handbill information 502 to the user who transmitted the item presentation, and in the next step S5 one registers this time's transmission information in handbill transmission list 702.

Next, it is described the case in which an item is transmitted from another user. If an item is transmitted from another user, one enters, via steps S1 and S6 in the main routine in Figure 14, processing by reception processing means 614 in step S7, and further one enters, via steps S401 and S403 in the routine in Figure 21, processing by item reception processing means 642 in step S404.

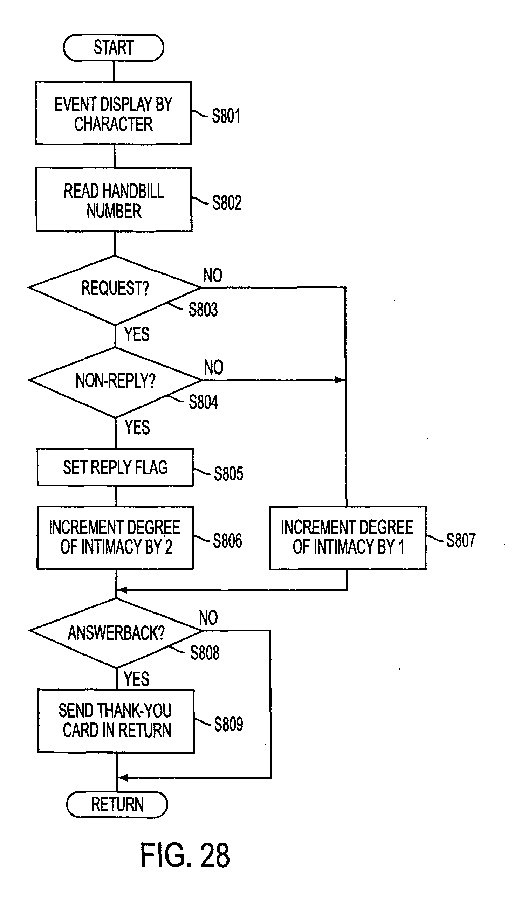

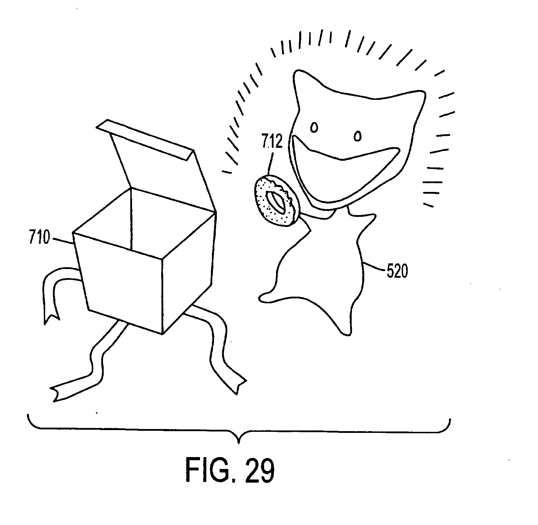

In the processing by item reception processing means 642, as shown in Figure 28, first, in step S801, event display by character 520 is performed. This event display is one in which, for example, a scene is displayed in which character 520 carries in a present containing an item, and an action display is done in which, for example as shown in Figure 29, character 520 opens the packaging of present 710 in front of the watching user, takes out item 712 from the package, and happily jumps up.

Next, in step S802, the handbill number is acquired that is attached to, for example, present 710. The significance of attaching a handbill number to present 710 is to show that another user has given the item, having read the handbill information 502 distributed by said user. Next, in step S803, it is decided whether handbill information 502 that is the basis of the present of item 712 concerns an item request. This decision is made according to whether the type of handbill information 502 corresponding to the acquired handbill number in handbill transmission list 700 is an item request.

Next, in step S804, it is decided whether the reply corresponding to said handbill information 502 is a non-reply. This decision is made according to whether the reply of handbill information 502 corresponding to the acquired handbill number in handbill transmission list 700 is a non-reply. If it is a non-reply, one proceeds to the next step S805 and sets "1", which indicates that it is a reply, as the reply in said handbill information 502 of handbill transmission list 700. Then, in step S806, in user information table 704 by means of degree-of-intimacy updating means 618 one increments by 2 the degree of intimacy of the user who gave item 712.

If in said step S804 it is decided that it is a reply, or if in said step S803 it is decided that it is not an item request, one proceeds to step S807 and in user information table 704 increments by 1 the degree of intimacy of the user who gave item 712.

At the stage at which the processing in said step S806 or step S807 ends, one proceeds to the next step S808, and it is decided whether to answer back with thank-you card 510. This decision is made according to whether there is an operation input from the user indicating an answerback of thank-you card 510. If an answerback is to be made, one proceeds to the next step S809 and, by means of answerback processing means 616, sends in return thank-you card 510 to the user who gave item 712.

This processing by item reception processing means 642 ends at the stage at which the processing in said step S809 ends or if it is decided in said step S808 that an answerback will not be made.

Next, it is described the case in which thank-you card 510 is sent in return from another user. If thank-you card 510 is sent in return from another user, one enters, via steps S1 and S6 in the main routine in Figure 14, processing by reception processing means 614 in step S7, then one proceeds, via step S401 and steps S403 and S405 in the routine in Figure 21, to step S406, and by means of degree-of-intimacy updating means 618, increments by 1 the degree of intimacy of the user in user information table 704 who sent thank-you card 510 in return.

And if the received information is neither handbill information 502 nor item 712 nor thank-you card 510, one proceeds from step S405 in Figure 21 to step S407, and other processing corresponding to the received information is done. This processing by reception processing means 614 ends at the stage at which processing ends in said step S402, step S404, step S406, or step S407.

Returning to the main routine in Figure 14, at the stage at which the processing ends in said step S5, step S7, or step S8, one proceeds to the next step S9, and it is decided whether there is a program termination request to this handbill processing means 600. If there is no program termination request, one returns to aforesaid step S1 and repeats the processing beginning with the step S1. This processing by handbill processing means 600 ends at the stage at which there is a program termination request.

Thus in communication system 200 relating to this embodiment, since each entertainment device 12 has at least handbill processing means 600 that transmits to server 204, for distribution to other entertainment devices 12, handbill information 502 in which content is displayed concerning character 520 to be displayed on monitor 18, for example handbill information 502 from a given entertainment device 12 is distributed via network 202 and server 204 to other entertainment devices 12.

In this case, handbill information 502 is not information concerning the user but information concerning character 520 to be displayed on monitor 18, which is connected to the user's entertainment device 12. Therefore a user who receives handbill information 502 will make some sort of a reply (including answerback) for character 520 or will give a present for character 520 of another user. Through such replies and presents, a good relationship is built up with other users.

That is, in the present embodiment, the user is able to enjoy amusement and interest heretofore unavailable over network 202, by for example building good relationships with other users via characters 520 by for example using the information sent from another user for a character while the user plays with characters 520.

In particular, in this embodiment, in handbill processing means 600 it is possible to prepare handbill information 502 that describes handwritten pictures and lettering by free format by means of first handbill preparation means 620, because it has at least first handbill preparation means 620, which prepares handbill information 502 based on input information including graphic data, and handbill transmission means 612, which transmits said handbill information 502. By sending such handbill information 502 to other users, said other users have the sense of receiving handwritten letters, and more-intimate relationships can be built up. And because such letters are handwritten, it is simple to draw lettering and pictures, making it possible to enjoy amusement and interest unavailable with a fixed format.

And because said handbill processing means 600 has second handbill preparation means 622, which lays out the input information according to one format selected from multiple formats and prepares said handbill information 502, as well as handbill transmission means 612, which transmits to server 204 at least information concerning said selected format and information concerning the layout of said input information, handbill information 502 is prepared with the input information laid out according to one format selected from multiple formats. And if this handbill information 502 is to be sent, one sends at least information concerning said selected format and information concerning the layout of said input information. In this case, the transfer speed can be increased and the speedy exchange of information becomes possible, because text data alone suffices as transmission data, with no need to send graphic data, etc., whose quantity of data is voluminous.

Also, said handbill transmission means 612 can establish an interesting transmission style, for example in which, when handbill information 502 is prepared by means of the handbill preparation means 610, handbill information 502 is transmitted by performing an event in which a specified character (handbill deliveryman 542) appears, the handbill information 502 is handed over to this handbill deliveryman 542, then said handbill deliveryman 542 disappears from the screen. The actual transmission of handbill information 502 is done electrically, but by performing such an event, one can have the sense that handbill deliveryman 542 is delivering a handbill, which has a physical image, to another user, the sense of familiarity with handbill deliveryman 542 is enhanced, and interest can be maintained in the exchange of information by means of handbill information 502.

Meanwhile, server 204 has handbill distribution processing means 602, which distributes to arbitrary other entertainment devices 12 the handbill information 502 that it receives, and among said other entertainment devices 12 it distributes said handbill information 502 to entertainment devices 12 concerning users who meet the distribution conditions included in said received handbill information 502, and thus it is possible to transmit handbill information 502 not to a large number of unspecified users but to users who appear to have an interest in handbill information 502 to be transmitted, and as a result, the time it takes to build good relationships with other users can be greatly shortened. Thus it becomes possible, even for a user who transmits handbill information 502 for the first time, to exchange information with other users in a short time, and even users who are not good at exchanging information can do it in a simple, free-and-easy way.

Also, handbill processing means 600 may be made so as to have reception event processing means 650 that performs event display, including handbill deliveryman 542, when handbill information 502 is received from server 204, so for example, when handbill information 502 is received, an event display can be performed in which handbill deliveryman 542 appears and begins to distribute handbill information 502, and a character 520 other than this handbill deliveryman 542 receives handbill information 502 from said handbill deliveryman 542 or picks up handbill information 502 that has fallen at that spot. Thus one can establish an interesting reception style for handbill information 502.

Also, the communication system, entertainment device, recording medium, and program relating to this invention are not limited to the above embodiment, and of course various alternative embodiments can be adopted without departing from the spirit of the present invention.

As described above, with the communication system, entertainment device, recording medium, and program relating to the present invention, it is possible to allow users to enjoy amusement and interest heretofore unavailable over a network, by for example building good relationships with other users via characters by for example using for characters the information sent from another user while the user plays with characters. It is also possible to enjoy the handling of various handbill information. Therefore it is possible to transmit information with a game-like sense.

While the present invention has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the invention.

## Claims

1. A communication system comprising:
a server connected to a network, and
an entertainment device which can access to said server via said network and which is connected to at least a display device,
wherein said entertainment device further comprises a handbill processing means that transmits to said server, for distribution to other entertainment device, handbill information on which content concerning character to be displayed on said display device is described.

2. A communication system according to claim 1, wherein said handbill processing means further comprises:
a handbill preparation means that prepares said handbill information based on input information that contains at least graphic data, and
a handbill transmission means that transmits said handbill information.

3. A communication system according to claim 1, wherein said handbill processing means further comprises:
a handbill preparation means that lays out input information according to one format selected from multiple formats and prepares said handbill information, and
a handbill transmission means that transmits to the server, as said handbill information, at least information concerning said selected format and information concerning the layout of said input information.

4. A communication system according to claim 2, wherein said handbill transmission means further comprises a transmission event processing means that performs event display, including the display of a specified character concerning the handbill, when said handbill information is prepared by means of said handbill preparation means.

5. A communication system according to claim 3, wherein said handbill transmission means further comprises a transmission event processing means that performs event display, including the display of a specified character concerning the handbill, when said handbill information is prepared by means of said handbill preparation means.

6. A communication system according to claim 1, wherein said server further comprises a handbill distribution means that distributes received handbill information to arbitrary other entertainment devices.

7. A communication system according to claim 6, wherein said handbill distribution means distributes said handbill information to those entertainment devices, among said other entertainment devices, that concern users who meet distribution conditions included in said received handbill information.

8. A communication system according to claim 1, wherein said handbill processing means further comprises a reception event processing means that performs event display, including the display of a specified character concerning the handbill, when said handbill information is received from said server.

9. A communication system according to claim 8, wherein said reception event processing means further comprises a handbill display means that displays said received handbill information according to prescribed input operations.

10. A communication system according to claim 9, wherein if said handbill information is prepared with input information laid out according to one format selected from multiple formats, said handbill display means reconstruct and display said handbill information based on at least information concerning said selected format and information concerning the layout of said input information.

11. A communication system according to claim 9, wherein said prescribed input operation includes instructions to said specified character that is being displayed.

12. A communication system according to claim 9, wherein said prescribed input operation includes instructions to a character other than said specified character that is being displayed.

13. A communication system according to claim 1, wherein said handbill processing means further comprises a parameter updating means in which, if the transmitted handbill information is information concerning a request and a reply agreeing to said request is received, a parameter indicating the goodness of the relationship is incremented concerning the other user who issues said reply.

14. A communication system according to claim 13, wherein said parameter indicating the goodness of the relationship is referenced at least in the operation display processing of a character displayed on said display device.

15. An entertainment device which can access to a server via a network and to which a display device is adapted for connection, comprising:
a handbill processing means that transmits to a server, for distribution to other entertainment device, handbill information on which content concerning character to be displayed on said display device is described.

16. A recording medium on which are recorded programs and data that are used in an entertainment device which can access to a server via a network, said entertainment device having a display device, said recording medium comprising:
a handbill processing step that transmits to said server, for distribution to other entertainment device, handbill information on which content concerning character displayed on said display device is described.

17. A recording medium according to claim 16, wherein said handbill processing step further comprises:
a handbill preparation step that prepares said handbill information based on input information that contains at least graphic data, and
a handbill transmission step that transmits said handbill information.

18. A recording medium according to claim 16, wherein said handbill processing step further comprises:
a handbill preparation step that lays out input information according to one format selected from multiple formats and prepares said handbill information, and
a handbill transmission step that transmits to the server, as said handbill information, at least information concerning said selected format and information concerning the layout of said input information.

19. A recording medium according to claim 17, wherein said handbill transmission step further comprises a transmission event processing step that performs event display, including the display of a specified character concerning the handbill, when said handbill information is prepared by means of said handbill preparation step.

20. A recording medium according to claim 18, wherein said handbill transmission step further comprises a transmission event processing step that performs event display, including the display of a specified character concerning the handbill, when said handbill information is prepared by means of said handbill preparation step.

21. A recording medium according to claim 16, further comprising a handbill distribution step that is executed in said server and distributes received handbill information to arbitrary other entertainment devices.

22. A recording medium according to claim 21, wherein said handbill distribution step distributes said handbill information to those entertainment devices, among said other entertainment devices, that concern users who meet distribution conditions included in said received handbill information.

23. A recording medium according to claim 16, wherein said handbill processing step further comprises a reception event processing step that performs event display, including the display of a specified character concerning the handbill, when said handbill information is received from said server.

24. A recording medium according to claim 23, wherein said reception event processing step further comprises a handbill display step that displays said received handbill information according to prescribed input operations.

25. A recording medium according to claim 24, wherein if said handbill information is prepared with input information laid out according to one format selected from multiple formats, said handbill display step reconstructs and displays said handbill information based on at least information concerning said selected format and information concerning the layout of said input information.

26. A recording medium according to claim 24, wherein said prescribed input operation includes instructions to said specified character that is being displayed.

27. A recording medium according to claim 24, wherein said prescribed input operation includes instructions to a character other than said specified character that is being displayed.

28. A recording medium according to claim 16, wherein said handbill processing step further comprises a parameter updating step in which, if the transmitted handbill information is information concerning a request and a reply agreeing to said request is received, a parameter indicating the goodness of the relationship is incremented concerning the other users who issue said reply.

29. A recording medium according to claim 28, wherein said parameter indicating the goodness of the relationship is referenced at least in the operation display processing of a character displayed on said display device.

30. In a computer-readable and -executable program used in an entertainment device which can access to a server via a network, said entertainment device having a display device, said program comprising:
a handbill processing step that transmits to said server, for distribution to other entertainment device, handbill information on which content concerning character displayed on said display device is described.

31. A program according to claim 30, wherein said handbill processing step further comprises:
a handbill preparation step that prepares said handbill information based on input information that contains at least graphic data, and
a handbill transmission step that transmits said handbill information.

32. A program according to claim 30, wherein said handbill processing step further comprises:
a handbill preparation step that lays out input information according to one format selected from multiple formats and prepares said handbill information, and
a handbill transmission step that transmits to the server, as said handbill information, at least information concerning said selected format and information concerning the layout of said input information.

33. A program according to claim 31, wherein said handbill transmission step further comprises a transmission event processing step that performs event display, including the display of a specified character concerning the handbill, when said handbill information is prepared by means of said handbill preparation step.

34. A program according to claim 32, wherein said handbill transmission step further comprises a transmission event processing step that performs event display, including the display of a specified character concerning the handbill, when said handbill information is prepared by means of said handbill preparation step.

35. A program according to claim 30, further comprising a handbill distribution step that is executed in said server and distributes received handbill information to arbitrary other entertainment devices.

36. A program according to claim 35, wherein said handbill distribution step distributes said handbill information to those entertainment devices, among said other entertainment devices, that concern users who meet distribution conditions included in said received handbill information.

37. A program according to claim 30, wherein said handbill processing step further comprises a reception event processing step that performs event display, including the display of a specified character concerning the handbill, when said handbill information is received from said server.

38. A program according to claim 37, wherein said reception event processing step further comprises a handbill display step that displays said received handbill information according to prescribed input operations.

39. A program according to claim 38, wherein if said handbill information is prepared with input information laid out according to one format selected from multiple formats, said handbill display step reconstructs and displays said handbill information based on at least information concerning said selected format and information concerning the layout of said input information.

40. A program according to claim 38, wherein said prescribed input operation includes instructions to said specified character that is being displayed.

41. A program according to claim 38, wherein said prescribed input operation includes instructions to a character other than said specified character that is being displayed.

42. A program according to claim 30, wherein said handbill processing step further comprises a parameter updating step in which, if the transmitted handbill information is information concerning a request and a reply agreeing to said request is received, a parameter indicating the goodness of the relationship is incremented concerning the other users who issue said reply.

43. A program according to claim 42, wherein said parameter indicating the goodness of the relationship is referenced at least in the operation display processing of a character displayed on said display device.
